# EUROPEAN PATENT APPLICATION

(11) **EP 4 850 949 A1**
(43) Date of publication of application: **09.12.2026**
(21) Application number: 25914683.5
(22) Date of filing: 26.09.2025
(51) Int. Cl.: B60K 1/04, B62D 25/20

(54) **REAR FIXING STRUCTURE FOR BATTERY PACK, AND REAR FLOOR ASSEMBLY**

(30) Priority: 06.01.2025 CN 202510016720
(71) Applicant: Chery Automobile Co., Ltd., Wuhu, Anhui 241006 (CN)
(72) Inventor: HE, Xinzheng, Wuhu, Anhui 241006 (CN); MO, Jiahong, Wuhu, Anhui 241006 (CN); LI, Peifu, Wuhu, Anhui 241006 (CN); YAN, Ting, Wuhu, Anhui 241006 (CN)
(74) Representative: Adamson Jones
(86) International application number: PCT/CN2025/124349
(87) International publication number: WO 2026/144322

(57) **Abstract**

The present application provides a rear fixing structure for a battery pack, and a rear floor assembly. Said rear fixing structure comprises a front cross member, a support frame and an anchor support. The front cross beam is connected to the anchor support by means of the support frame. Said rear fixing structure is connected to a battery pack by means of the front cross beam.

## Description

This present disclosure claims priority to Chinese patent application No. 202510016720.5, filed on January 6, 2025, and entitled "REAR FIXING STRUCTURE FOR BATTERY PACK, AND REAR FLOOR ASSEMBLY", the entire contents of which are incorporated herein by reference.

### TECHNICAL FIELD

The present disclosure relates to the field of battery packs, and particularly, to a rear fixing structure for a battery pack and a rear floor assembly including the rear fixing structure.

### BACKGROUND

With the rising popularity of electric vehicles, an increasing number of new energy vehicles have been developed and manufactured by original equipment manufacturers (OEMs), and even vehicles based on traditional fuel vehicle platforms are being incorporated into the transition from conventional to electric vehicles. Since traction batteries are added to the bottom of the vehicle, and these traction batteries vary in size, new design challenges are posed to vehicle body performance. In particular, there is a significant impact on the torsional mode and the torsional stiffness of the vehicle body.

In the related art, automobiles utilize two separate, additionally provided brackets on the vehicle body to achieve the mounting and the fixation of the rear portion of the battery pack.

However, in the case where such a structure for fixing the rear portion of the battery pack is employed, the torsional mode and the torsional stiffness of the entire vehicle still need to be improved.

### SUMMARY

An objective of the present disclosure is to provide a rear fixing structure for a battery pack that facilitates connection of the battery pack to a rear portion and improves the torsional mode and the torsional stiffness of the entire vehicle.

In order to achieve the above object, the present disclosure employs the following technical solutions.

A rear fixing structure for a battery pack is provided, including a front cross member, a support frame, and an anchor bracket. The front cross member is connected to the anchor bracket via the support frame, and the rear fixing structure is connected to the battery pack via the front cross member.

In some possible embodiments, the support frame includes a frame body, the frame body including a first connecting strut, a second connecting strut, a third connecting strut and a fourth connecting strut that are connected in sequence. The first connecting strut is arranged to intersect the second connecting strut, the second connecting strut is arranged to intersect the third connecting strut, the third connecting strut is arranged to intersect the fourth connecting strut, and the support frame is W-shaped.

In some possible embodiments, the frame body is provided with an abutment surface configured to abut onto the front cross member or the anchor bracket, and the frame body is connected to the front cross member or the anchor bracket via the abutment surface.

In some possible embodiments, the anchor bracket includes two anchor members spaced apart from each other, and the rear fixing structure is lapped onto a rear floor cross member of a vehicle body via the anchor bracket. One of the two anchor members is connected at a junction between the first connecting strut and the second connecting strut, and the other of the two anchor member is connected at a junction between the third connecting strut and the fourth connecting strut.

In some possible embodiments, the front cross member is configured to be connected to the rear longitudinal member bodies, and each of two ends of the front cross member is connected to a respective one of the rear longitudinal member bodies via one adapter bracket.

In some possible embodiments, the adapter bracket includes a bracket box, and the bracket box is connected to the rear longitudinal member body via a support flange.

In some possible embodiments, the support frame is configured to be inclined, and each of the front cross member, the support frame, and the anchor bracket is made of an aluminum alloy material.

In some possible embodiments, a cross-section of each of the front cross member and the anchor bracket is rectangular.

A rear floor assembly is provided, including a rear floor body. The rear floor body includes two rear longitudinal member bodies that are spaced apart from each other and opposed to each other. A rear floor cross member is arranged between the two rear longitudinal member bodies; and any rear fixing structure described above is disposed on the rear floor body, each of two ends of the rear fixing structure is connected to a respective one of rear longitudinal member bodies via one adapter bracket, and the rear fixing structure is connected to the rear floor cross member via an anchor bracket.

In some possible embodiments, each of two ends of the rear floor cross member is connected to a respective one of the rear longitudinal member bodies via one connecting plate.

The advantages of the present disclosure are as follows.

The present disclosure provides a rear fixing structure for a battery pack and a rear floor assembly including the rear fixing structure. The rear fixing structure for the battery pack provided in the present disclosure facilitates the connection between the battery pack and the vehicle body. In addition, the present disclosure significantly ensures the structural strength of the rear fixing structure for the battery pack through the cooperation of the front cross member, the support frame, and the anchor bracket.

Further, through the configuration of the rear fixing structure for the battery pack, the torsional mode and the torsional stiffness of the entire vehicle can be maximized, while satisfying the packaging and cost requirements, thereby improving the NVH performance and the operational stability of the entire vehicle.

### BRIEF DESCRIPTION OF DRAWINGS

The following provides a brief description of the contents showed in the accompanying drawings of the specification of the present disclosure, as well as the reference signs therein.
FIG. 1 is a schematic structural diagram of a rear fixing structure for a battery pack in the present disclosure;
FIG. 2 is a schematic structural diagram showing a case where a rear fixing structure for a battery pack is connected to a vehicle body in the present disclosure;
FIG. 3 is an exploded view of a rear floor assembly in the present disclosure;
FIG. 4 is a schematic structural diagram of an adapter bracket in the present disclosure;
FIG. 5 is a schematic structural diagram of a rear floor cross member in the present disclosure; and
FIG. 6 is a schematic structural diagram of the connecting plate in the present disclosure.

The reference signs in the drawings are as follows:
1. front cross member; 2. anchor bracket; 3. support frame; 4. adapter bracket; 101. rear fixing structure; 102. rear floor cross member; 103. connecting plate; 104. rear longitudinal member body.

### DETAILED DESCRIPTION

Specific embodiments of the present application are further described in detail below with reference to the accompanying drawings and through the description of the optimal embodiment.

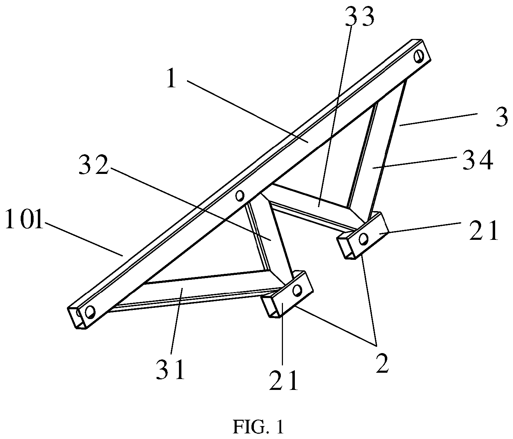

As shown in FIG. 1, a rear fixing structure 101 for a battery pack (hereinafter referred to as the rear fixing structure 101) includes a front cross member 1, a support frame 3, and an anchor bracket 2. The rear fixing structure 101 provided in the present disclosure facilitates the connection between the battery pack and the vehicle body. In addition, through the cooperation of the front cross member 1, the support frame 3, and the anchor bracket 2, the structural strength of the rear fixing structure 101 is greatly ensured.

The rear fixing structure 101 in the present disclosure is mainly used for the connection and the mounting of the battery pack at a rear portion of the vehicle body.

The rear fixing structure 101 in the present disclosure mainly includes a front cross member 1, a support frame 3, and an anchor bracket 2. Two ends of the front cross member 1 are laterally lapped to two rear longitudinal member bodies, respectively. The support frame 3 serves as a bridging frame, facilitating the connection between the anchor bracket 2 and the front cross member 1. In addition, in the present disclosure, the anchor bracket 2 is connected to a rear floor cross member 102. Based on this design, the rear longitudinal member bodies, the rear floor cross member 102, and the rear fixing structure 101 form a triangular configuration, which can not only ensure the structural strength of a rear portion of the rear floor assembly, but also ensure the structural strength of a rear portion of the vehicle body chassis.

In the present disclosure, the front cross member 1 is connected to the anchor bracket 2 via the support frame 3. The rear fixing structure 101 is connected to the battery pack via the front cross member 1. The above configuration facilitates the mounting and the fixing of the battery pack to the vehicle body.

Further, as shown in FIG. 1, in the present disclosure, the support frame 3 includes a frame body, which serves as the main structure of the support frame 3. In the present disclosure, the frame body includes a first connecting strut 31, a second connecting strut 32, a third connecting strut 33, and a fourth connecting strut 34. The first connecting strut 31, the second connecting strut 32, the third connecting strut 33 and the fourth connecting strut 34 are connected to each in sequence. The first connecting strut 31 intersects the second connecting strut 32. The second connecting strut 32 intersects the third connecting strut 33. The third connecting strut 33 intersects the fourth connecting strut 34. The support frame 3 is W-shaped. Based on the above design, the combination of the support frame 3, the front cross member 1, and the anchor bracket 2 forms a plurality of sets of triangular structures, thereby further ensuring the structural strength of both the support frame 3 and the rear fixing structure 101.

Further, in the present disclosure, the frame body is provided with an abutment surface configured to abut with the front cross member 1 or the anchor bracket 2. The frame body is connected to the front cross member 1 or the anchor bracket 2 via the abutment surface. The arrangement of the abutment surface ensures a contact area between the support frame 3 and the front cross member 1, or a contact area between the support frame 3 and the anchor bracket 2, thereby ensuring the stability of the mounting between the frame body and the front cross member 1 as well as the stability of the mounting between the frame body and the anchor bracket 2.

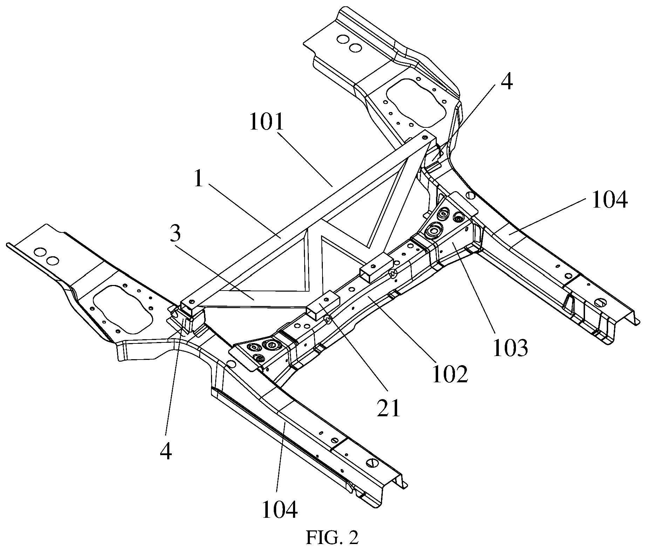

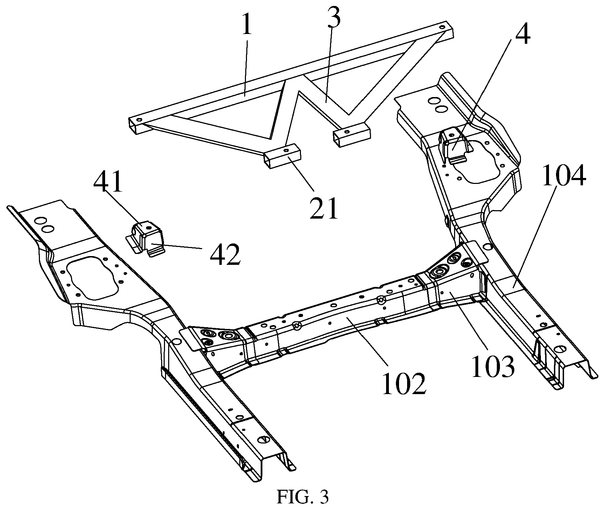

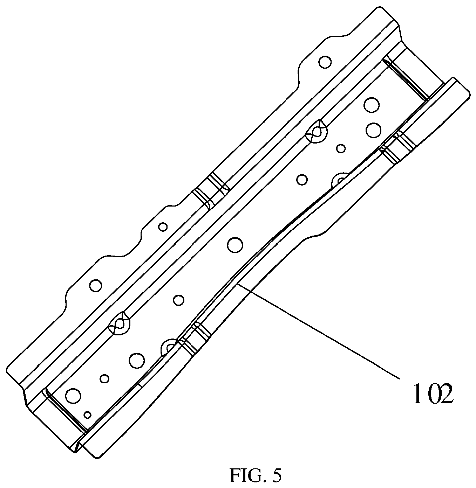

Further, as shown in FIGS. 2 to 3, in the present disclosure, the anchor bracket 2 includes two anchor members 21 spaced apart from each other. The anchor members 21 serve as connectors, facilitating the lap-mounting of the anchor members 21 onto the rear floor cross member 102 (as shown in FIG. 5).

In addition, in the present disclosure, the rear fixing structure 101 is lapped onto the rear floor cross member 102 of the vehicle body via the anchor bracket 2. An anchor member 21 is connected to a junction between the first connecting strut 31 and the second connecting strut 32, and another anchor member 21 is connected to a junction between the third connecting strut 33 and the fourth connecting strut 34. The anchor members 21 serve as connectors, and are respectively disposed at the junctions of the connecting struts. Based on the above configuration, the anchor member 21 can further serve as a reinforcement member, thereby well ensuring the structural strength of the rear fixing structure 101.

Further, as shown in FIGS. 2 to 3, in the present disclosure, each of two ends of the front cross member 1 is connected to a respective one of the rear longitudinal member bodies 104 via one adapter bracket 4. The connection of the adapter bracket 4 facilitates the connection between the front cross member 1 and the rear longitudinal member body 104. In addition, the adapter bracket 4 can further serve as a suspension member, so as to facilitate the change of the position of the front cross member 1. Subsequently, the height of the adapter bracket 4 can be adjusted as needed, which can better ensure leveling between the front end and the rear end of the battery pack.

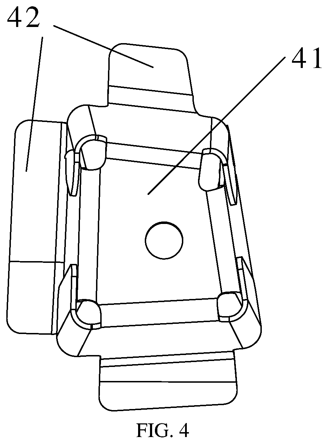

As shown in FIG. 4, in the present disclosure, the adapter bracket 4 includes a bracket box 41, which is hollow inside. The bracket box 41 can not only ensure the strength of the adapter bracket 4, but also serve to increase the height of the adapter bracket 4. Additionally, the bracket box 41, which is hollow inside, can reduce weight, and facilitate a fastener to pass through the bracket box 41 subsequently. In other words, the bracket box 41 that is hollow inside can reduce the resistance for the fastener passing therethrough, thereby facilitating the fastener to pass through the bracket box 41 to be connected with other components, such as being connected with the rear longitudinal member body 104.

In the present disclosure, the bracket box 41 is connected to the rear longitudinal member body 104 via a support flange 42. Based on this arrangement, a contact area between the adapter bracket 4 and the rear longitudinal member body 104 is ensured, thereby facilitating the fitting of the bracket box 41 onto the rear longitudinal member body 104.

Further, in the present disclosure, the support frame 3 is configured to be inclined, based on such an arrangement, the rear longitudinal member body 104, the rear floor cross member 102, and the rear fixing structure 101 define a triangular structure, thereby ensuring good stability and firmness of the connection between the rear fixing structure 101 and the vehicle body.

In addition, in the present disclosure, each of the front cross member 1, the support frame 3, and the anchor bracket 2 is made of an aluminum alloy material. This arrangement greatly ensures the structural strength of the front cross member 1, the support frame 3, and the anchor bracket 2.

In the present disclosure, vertical sections, namely cross sections, of both the front cross member 1 and the anchor member 21 are rectangular. The use of the rectangular aluminum alloy structure in the present disclosure can well ensure the structural strength of the front cross member 1 and the anchor member 21, while also facilitating their subsequent connections with the rear floor cross member 102 or the rear longitudinal member body 104.

A rear floor assembly is further provided, including a rear floor body. The rear floor body includes two rear longitudinal member bodies 104 which are spaced apart from each other and opposed to each other. A rear floor cross member 102 is arranged between the two rear longitudinal member bodies. A rear fixing structure 101 is provided on the rear floor body. Each of the two ends of the rear fixing structure 101 is connected to a respective one of the rear longitudinal member bodies via an adapter bracket 4. The rear fixing structure 101 is connected to the rear floor cross member 102 through anchor members 21. The rear fixing structure 101 in the present disclosure facilitates the connection between the battery pack and the vehicle body. In addition, in the present disclosure, through the cooperation of the front cross member 1, the support frame 3 and the anchor bracket 2, the structural strength of the rear fixing structure 101 is greatly ensured. In addition, by arranging the rear fixing structure 101 at the rear portion of the vehicle, it is possible to maximize the torsional mode and the torsional stiffness of the entire vehicle while satisfying the packaging and cost requirements, thereby improving the NVH (noise, vibration, and harshness, hereinafter referred to as NVH) performance and operational stability of the entire vehicle.

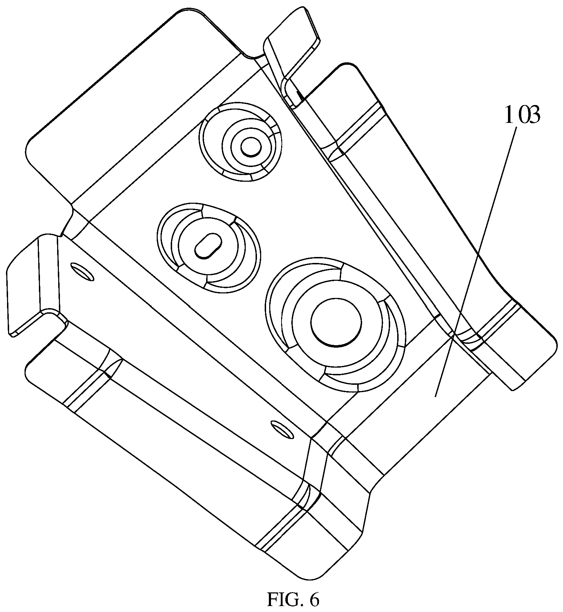

Further, as shown in FIGS. 2 to 3, in the present disclosure, each of two ends of the rear floor cross member 102 is connected to the rear longitudinal member body 104 via a respective cross member connecting plate 103 (as shown in FIG. 6). The arrangement of the cross member connecting plates 103 facilitates the mounting of the rear floor cross member 102 onto the rear longitudinal member bodies 104.

Specifically, the rear fixing structure 101 in the present disclosure mainly includes a front cross member 1, a support frame 3, and an anchor bracket 2. The front cross member 1 is connected to the anchor bracket 2 via the support frame 3. The rear fixing structure 101 of the vehicle body is connected to a battery pack via the front cross member 1. The anchor bracket 2 includes two anchor members 21 which are spaced apart from each other, and the rear fixing structure 101 is lapped to the rear floor cross member 102 of the vehicle body via the anchor bracket 2.

The present disclosure can maximize the torsional mode and the torsional stiffness of the entire vehicle, while satisfying the packaging and cost requirements, thereby improving the NVH performance and the operational stability of the entire vehicle.

The rear fixing structure 101 in the present disclosure is substantially an aluminum alloy frame structure. The rear fixing structure 101 in the present disclosure is connected to the vehicle body via adapter brackets 4.

In addition, in the present disclosure, the main structure of the rear fixing structure 101 is formed by welding an aluminum frame, that is, by welding extruded aluminum square tubes. The front cross member 1 provides battery pack mounting points and front anchor points. The W-shaped aluminum support frame 3 in the middle serves as a main load-transferring frame. The lower anchor bracket 2 is connected to the vehicle body and serves as a rear anchor point.

The rear fixing structure 101 in the present disclosure, when combined with the vehicle body, can form a stable structure including a plurality of mutually-supporting triangles, thereby effectively improving the torsional performance of the vehicle body.

In the present disclosure, the adapter bracket 4 is formed as a self-welded sheet metal structure, and is lapped to the rear longitudinal member body 104 on two surfaces.

The anchor member 21 is also an aluminum tube, which is integrally welded with the support frame 3 and is bolted to the rear floor cross member 102.

Based on the aforementioned design, the adapter bracket 4 can be flexibly adjusted according to positions and requirements. This not only satisfies the platforming requirements but also ensures flexibility layout for different vehicle models. In other words, it can be shared among different vehicle models by only correspondingly adjusting positions of battery pack lugs for connection with the frame.

In addition, in the present disclosure, the front cross member 1, the support frame 3, and the anchor bracket 2 are mainly made of aluminum profiles and are connected through fusion welding to define an aluminum frame serving as a core frame.

The aluminum frame is further connected to the vehicle body via bolts.

Specifically, each of the two ends of the front cross member 1 is connected to a respective one of the rear longitudinal member bodies 104 via an adapter bracket 4, and the anchor bracket 2 is connected to the rear floor cross member 102.

That is, in the present disclosure, one adapter bracket 4 is provided on each rear longitudinal member body 104. The two adapter brackets 4 are arranged symmetrically in the left-right direction. During connection, the adapter brackets 4 are spot-welded to the rear longitudinal member body 104, and it is required that the support flanges 42 of the adapter brackets 4 is lapped onto a chamfered portion or a boss structure of the rear longitudinal member to ensure the local connection rigidity.

The rear floor cross member 102 is spot-welded to both the rear longitudinal member bodies104 and the rear floor cross member 102 via welding surfaces, the welding surfaces are configured to ensure three-surface lap-connection, so as to ensure stable and continuous load transfer at joints, and the connecting plates 103 on both the left and right sides of the rear floor cross member 102 are symmetrically arranged.

In summary, the present disclosure has the following advantages.

The present disclosure features a rational design layout. In the project of internal combustion engine to electric vehicle (ICE-to-EV) conversion, a rational process is provided and the manufacturing is convenient. Main frame members are connected via bolts, requiring minimal modifications to the base platform vehicle body, thereby facilitating assembly and disassembly. Moreover, the structure is lightweight, thereby minimizing manufacturing costs and achieving vehicle weight reduction, while satisfying performance requirements.

The present disclosure features a reliable structural design, by employing a frame member structure, a stable structure including five triangles is formed, which can satisfy NVH performance improvement requirements, with a torsional stiffness increase of approximately 30% and a torsional mode increase of approximately 8%. Further, the structure satisfies various performance requirements such as strength fatigue, safety, packaging, and process. The process is simple, the production difficulty is low, and the weight and cost are reduced, thereby improving product competitiveness.

The present disclosure features an ingenious and aesthetic design, permitting a robust overall structure of a vehicle body rear floor and achieving excellent performance and low costs.

According to the present disclosure, the rear fixing structure 101 and the vehicle body structure define a structure including five triangles.

The front cross member 1 is an aluminum profile and provides direct mounting points for the battery pack. Accordingly, the rear fixing structure 101 in the present disclosure can provide three mounting points for the battery pack at the rear portion of the vehicle, which is a configuration of adding three battery pack mounting points on the front cross member 1. Two mounting points are respectively arranged on a left side and a right side of the vehicle body. Each of the mounting points on the two sides is connected to the corresponding rear longitudinal member body 104 via a sheet metal part, namely the adapter bracket 4. The third mounting point is arranged as close to the middle of the front cross member 1 as possible, so that the three mounting points are evenly distributed, thereby providing good left-right balance and stable force transfer. If there are two mounting points in the middle of the front cross member 1, the mounting points are arranged as close to the trisection points of the front cross member 1 as possible.

The support frame 3 in the present disclosure is a W-shaped aluminum frame, which serves as a main intermediate force-transferring path between the rear floor cross member 102 and the mounting points of the rear battery pack.

The rear structure is designed as the anchor bracket 2, which is an aluminum profile bracket.

In the present disclosure, the respective aluminum profiles are connected through fusion welding, so as to enable a bilaterally symmetrical design for the rear fixing structure 101.

In the present disclosure, the fixing points of the battery packs at both ends of the front cross member 1 coincide with the connection points between the front cross member 1 and the adapter brackets 4. Based on this design, a secondary connection between the front cross member 1 and the adapter bracket 4 can be achieved, thereby well ensuring the mounting and connection stability of the front cross member 1 on the adapter brackets 4.

In addition, in the present disclosure, connection points between the battery pack and the front cross member 1 are arranged at even intervals on the front cross member 1 as much as possible, and welding position between the W-shaped support frame 3 and the front cross member 1 are located precisely at fixed connection positions between the battery pack and the front cross member 1.

The anchor members 21 are connected to the rear floor cross member 102 via bolts, and the mounting holes for connection are arranged to reuse the existing mounting holes, such as fuel tank mounting holes, as much as possible. Additionally, the mounting points between the anchor members 21 and the rear floor cross member 102 are arranged to ensure sufficient rigidity, for example, on a bracket or a member with a closed-section, so as to mainly addresses the problems regarding insufficient strength of the battery pack mounting points and a structural weakness from the battery pack to the rear floor cross member 102 during vehicle body torsion.

The rear longitudinal member body 104 in the present disclosure mainly serve as a left-right force-transferring support structure of the rear fixing structure 101. By connecting both ends of the front cross member 1 onto the rear longitudinal member bodies 104 respectively, and connecting the anchor bracket 2 onto the rear floor cross member 102, a continuous and stable structure in longitudinal and lateral directions is defined, thereby ensuring continuous and stable force transfer of the rear fixing structure 101.

Further, in the present disclosure, the adapter bracket 4 is connected to the rear longitudinal member body 104. The adapter bracket 4 and the rear longitudinal member body 104 are connected to each other through spot welding via a support flange 42, which is arranged as close to a chamfered portion of the rear longitudinal member as possible, so as to ensure that the rigidity and the strength of the welding region satisfy the requirements.

In addition, the adapter bracket 4 in the present disclosure is hollow inside and fits with the rear longitudinal member body 104 via the support flange 42 to define a closed section, thereby addressing the problems regarding insufficient rigidity and strength of the left and right mounting points at the rear portion of the battery pack.

The rear floor cross member 102 in the present disclosure mainly provides mounting points for the anchor members 21, and positions of these mounting points are also arranged at even intervals as much as possible. This mainly optimizes longitudinal and lateral force-transferring paths of the vehicle body.

In the present disclosure, the connecting plate 103 on the right side of the rear floor cross member 102 is welded onto both the rear longitudinal member body 104 and the rear floor cross member 102 via welding surfaces, respectively. The left connecting plate 103 is symmetrical identical to the right connecting plate 103, thereby reducing the number of molds.

The rear fixing structure 101 for the battery pack provided in the present disclosure features an aesthetic overall structure and continuous load transfer. In addition to satisfying the performance requirements such as vehicle structure durability, NVH, and safety, the rear fixing structure further takes into account weight and cost due to a lightweight nature of the aluminum profiles.

The specific implementation of the present disclosure is not limited to the above descriptions. Any non-substantive improvements made by employing the method concept and technical solutions of the present disclosure shall fall within the scope of protection of the present disclosure.

## Claims

1. A rear fixing structure for a battery pack, comprising: a front cross member (1), a support frame (3), and an anchor bracket (2); wherein
the front cross member (1) is connected to the anchor bracket (2) via the support frame (3); and
the rear fixing structure is connected to the battery pack via the front cross member (1).

2. The rear fixing structure according to claim 1, wherein the support frame (3) comprises a frame body, the frame body comprising a first connecting strut (31), a second connecting strut (32), a third connecting strut (33) and a fourth connecting strut (34) that are connected in sequence; wherein the first connecting strut (31) is arranged to intersect the second connecting strut (32), the second connecting strut (32) is arranged to intersect the third connecting strut (33), the third connecting strut (33) is arranged to intersect the fourth connecting strut (34), and the support frame (3) is W-shaped.

3. The rear fixing structure according to claim 2, wherein the frame body is provided with an abutment surface configured to abut onto the front cross member (1) or the anchor bracket (2); and the frame body is connected to the front cross member (1) or the anchor bracket (2) via the abutment surface.

4. The rear fixing structure according to claim 2, wherein the anchor bracket (2) comprises two anchor members (21) spaced apart from each other, and the rear fixing structure is lapped onto a rear floor cross member (102) of a vehicle body via the anchor bracket (2); wherein one of the two anchor members (21) is connected at a junction between the first connecting strut (31) and the second connecting strut (32), and the other of the two anchor member (21) is connected at a junction between the third connecting strut (33) and the fourth connecting strut (34).

5. The rear fixing structure according to claim 1, wherein the front cross member (1) is configured to be connected to rear longitudinal member bodies (104), and each of two ends of the front cross member (1) is connected to a respective one of the rear longitudinal member bodies (104) via one adapter bracket (4).

6. The rear fixing structure according to claim 5, wherein the adapter bracket (4) comprises a bracket box (41), and the bracket box (41) is connected to the rear longitudinal member body (104) via a support flange (42).

7. The rear fixing structure according to claim 5, wherein the support frame (3) is configured to be inclined, and each of the front cross member (1), the support frame (3), and the anchor bracket (2) is made of an aluminum alloy material.

8. The rear fixing structure according to claim 5, wherein a cross-section of each of the front cross member (1) and the anchor bracket is rectangular.

9. A rear floor assembly, comprising: a rear floor body, wherein the rear floor body comprises two rear longitudinal member bodies (104) that are spaced apart from each other and opposed to each other; wherein a rear floor cross member (102) is arranged between the two rear longitudinal member bodies (104); and the rear fixing structure as defined in any one of claims 1 to 8 is disposed on the rear floor body, each of two ends of the rear fixing structure is connected to a respective one of rear longitudinal member bodies (104) via one adapter bracket (4), and the rear fixing structure is connected to the rear floor cross member (102) via an anchor bracket (2).

10. The rear floor assembly according to claim 9, wherein each of two ends of the rear floor cross member (102) is connected to a respective one of the rear longitudinal member bodies (104) via one connecting plate (103).
